Europäisches Patentamt

European Patent Office

Office européen des brevets

(19)

(11) **EP 0 912 963 B1**

(12) **FASCICULE DE BREVET EUROPEEN**

(45) Date de publication et mention
de la délivrance du brevet:
**09.10.2002 Bulletin 2002/41**

(21) Numéro de dépôt: **97932856.4**

(22) Date de dépôt: **08.07.1997**

(51) Int Cl.⁷: $G06T\ 7/00$

(86) Numéro de dépôt international:
**PCT/FR97/01232**

(87) Numéro de publication internationale:
**WO 98/001826 (15.01.1998 Gazette 1998/02)**

(54) **PROCEDE DE LOCALISATION D'UN ELEMENT D'INTERET CONTENU DANS UN OBJET TRIDIMENSIONNEL, EN PARTICULIER LORS D'UN EXAMEN DE STEREOTAXIE EN MAMMOGRAPHIE**

**VERFAHREN ZUR LOKALISIERUNG EINES IN EINEM DREIDIMENSIONALEN OBJEKT ENTHALTENEN ELEMENTS, INSBESONDERE BEI EINER STEREOTAXIEPRÜFUNG IN DER MAMMOGRAPHIE**

**METHOD FOR LOCATING AN ELEMENT OF INTEREST CONTAINED IN A THREE-DIMENSIONAL OBJECT, IN PARTICULAR DURING A STEREOTACTIC INVESTIGATION IN THE X-RAY EXAMINATION OF THE BREAST**

(84) Etats contractants désignés:
**DE IT NL**

(30) Priorité: **09.07.1996 FR 9608542**

(43) Date de publication de la demande:
**06.05.1999 Bulletin 1999/18**

(73) Titulaire: **GE MEDICAL SYSTEMS SA
78533 Buc Cedex (FR)**

(72) Inventeurs:
• **MULLER, Serge
  F-78280 Guyancourt (FR)**
• **GRIMAUD, Michel
  F-75013 Paris (FR)**
• **HEIDSIECK, Robert
  F-78150 Rocquencourt (FR)**
• **SALMON LEGAGNEUR, Thierry
  F-75017 Paris (FR)**

• **BOTHOREL, Sylvie
  F-92100 Boulogne-Billancourt (FR)**

(74) Mandataire: **Goode, Ian Roy et al
London Patent Operation
General Electric International, Inc.
Essex House
12-13 Essex Street
London WC2R 3AA (GB)**

(56) Documents cités:
**WO-A-92/06444**

• **MASATOSHI OKUTOMI ET AL.: "A stereo matching algorithm: an adaptative window based on a statistical model" SYSTEMS & COMPUTERS IN JAPAN, vol. 23, no. 8, 1992, NEW YORK US, pages 669-677, XP000329645**

EP 0 912 963 B1

# EP 0 912 963 B1

## Description

L'invention concerne la localisation d'un élément d'intérêt contenu dans un objet tridimensionnel à partir des positions de régions d'intérêt homologues correspondant audit élément d'intérêt et apparaissant dans un ensemble d'images stéréotaxiques dudit objet.

Bien que l'invention s'applique à tout ensemble d'images stéréotaxiques d'un objet tridimensionnel quelconque, elle est particulièrement utile dans le domaine médical et notamment lors d'un examen de stéréotaxie en mammographie pour la localisation de microcalcifications dans un sein.

Un examen de stéréotaxie en général permet d'accéder avec une grande précision, de l'ordre du millimètre, à un point donné d'un objet tridimensionnel, à partir de deux projections bidimensionnelles de cet objet acquises par exemple selon deux incidences angulaires opposées de part et d'autre de la normale au plan du récepteur d'images délivrant lesdites projections.

A partir de la connaissance, d'une part, de la position de la projection de ce point dans le plan de chaque image stéréotaxique obtenue, et, d'autre part, de la géométrie de l'appareil de prises de vues stéréotaxiques ayant conduit à la construction des deux images, il est possible de calculer la position exacte spatiale de ce point dans l'objet tridimensionnel, par calcul trigonométrique.

En résumé, un examen stéréotaxique nécessite :

de faire au moins deux images de l'objet à différentes angulations,

de connaître parfaitement la géométrie d'acquisition du système stéréotaxique, et

de pouvoir localiser sur les différentes images stéréotaxiques obtenues, le lieu de la projection de l'élément d'intérêt choisi.

Les deux premiers points ne posent pas de problème majeur.

Actuellement, en mammographie, l'examen de stéréotaxie est effectué à l'aide d'un mammographe équipé d'un dispositif de prises de vues stéréotaxiques. Le mammographe comprend un tube à rayons X, situé à l'extrémité d'un premier bras qui est mobile autour d'un axe et émettant un rayonnement X vers un récepteur situé à l'extrémité d'un autre bras. Entre le tube et le récepteur sont disposés, d'une part, un plateau porte-sein, ou support patient, et, d'autre part, un plateau de compression assurant le maintien en place du sein lors des mammographies. Le récepteur d'images peut être un récepteur numérique, tel qu'une caméra CCD par exemple, délivrant des images stéréotaxiques numérisées. Les prises de vues stéréotaxiques nécessitent la rotation du tube à rayons X autour des plateaux porte-sein et de compression, selon deux orientations successives opposées de part et d'autre de sa position initiale perpendiculaire au plan du récepteur d'images.

A partir des images stéréotaxiques numérisées obtenues, la localisation de l'élément d'intérêt sur les différentes images est une opération délicate, en particulier en mammographie, puisqu'elle fait appel à une mise en correspondance, ou appariement ("matching" en langue anglaise) de régions d'intérêt homologues correspondant, dans deux images stéréotaxiques différentes, à un même élément d'intérêt situé dans le sein.

Ainsi, en mammographie, on cherche à apparier sur les différentes images stéréotaxiques obtenues, les régions d'intérêt qui correspondent à une même microcalcification.

Or, l'appariement des microcalcifications projetées est un problème difficile car les microcalcifications ne se ressemblent pas d'une image à l'autre. Leur forme et leur contraste peuvent changer ainsi que leur agencement dans l'espace. Elles peuvent se superposer avec des zones fibreuses ou avec d'autres microcalcifications.

Jusqu'à présent, l'appariement était effectué entièrement manuellement par le radiologue. Ce dernier choisissait quelles étaient les régions d'intérêt en correspondance sur les deux images stéréotaxiques angulées, puis rentrait les coordonnées bidimensionnelles de ces régions dans un calculateur qui donnait la position spatiale de la microcalcification, c'est-à-dire les coordonnées tridimensionnelles de cette dernière. A partir de ces coordonnées, le radiologue pouvait ajuster par exemple la position d'un porte-aiguille de façon à ce que l'aiguille vienne à l'aplomb de la microcalcification pour permettre sa ponction par exemple.

Or, cet appariemment entièrement manuel s'avère être une étape longue et parfois imprécise.

En matière d'appariement automatique, le document WO-A-92/06444 divulgue, pour une application de détermination de la parallaxe, le traitement de corrélation de pixels dans des fenêtres de deux images stéréotaxiques correspondant à des régions d'intérêt et le traitement de corrélation entre les fenêtres.

L'invention a pour but de réduire sensiblement la durée d'un examen stéréotaxique et d'obtenir une meilleure précision d'appariement. Elle est définie dans les revendications de procédé 1 et 12 ci-après.

D'une façon très générale, selon l'invention, on définit une mesure de similarité permettant d'évaluer la ressemblance entre une région d'intérêt (microcalcification par exemple) sélectionnée (manuellement par le radiologue par exemple, ou bien automatiquement par un procédé de sélection automatique) sur une des images stéréotaxiques angulées et une région d'intérêt d'une deuxième image stéréotaxique.

A partir de cette mesure de similarité, on sélectionne, pour obtenir la région d'intérêt homologue, un certain nombre de "candidats" appartenant à une zone de recherche et ayant une forte ressemblance avec la microcalcification de départ.

Ensuite, en utilisant les principes de la stéréotaxie, on calcule les coordonnées tridimensionnelles de ces candidats, puis on les reprojette sur l'image de centrage. On calcule à nouveau la similarité entre ces points reprojetés et la microcalcification initialement choisie. En effet, si le candidat correspond effectivement à la microcalcification de départ, alors sa projection calculée correspondra effectivement à l'image de cette microcalcification sur l'image de centrage.

Enfin, à l'aide de ces deux valeurs de similarité calculées pour chaque candidat, on propose le meilleur candidat.

En théorie, on pourrait s'abstenir de l'étape de reprojection utilisant l'image de centrage et se contenter de l'appariement tel qu'il vient d'être exposé pour sélectionner la région d'intérêt homologue de celle sélectionnée sur l'image cible. Cependant, il est nettement préférable d'utiliser la reprojection des candidats sur l'image de centrage pour vérifier la première sélection effectuée, notamment dans le domaine de la mammographie où les microcalcifications peuvent changer de forme et de contraste d'une image à l'autre.

En d'autres termes, l'invention propose tout d'abord un procédé de localisation d'un élément d'intérêt contenu dans un objet tridimensionnel à partir des positions de régions d'intérêts homologues correspondant audit élément d'intérêt et apparaissant dans un ensemble d'images stéréotaxiques dudit objet. Ce procédé comporte une étape de sélection dans une première image stéréotaxique, ou image cible, d'une première région d'intérêt, en particulier une microcalcification, dite région d'intérêt cible. Le procédé comporte également un appariement de ladite première région avec une deuxième région d'intérêt homologue de la première et apparaissant dans une deuxième image stéréotaxique.

Selon une caractéristique générale de l'invention, les images stéréotaxiques étant numérisées, on sélectionne dans l'étape de sélection un pixel cible dans ladite région d'intérêt cible. Dans l'étape d'appariement, on génère autour du pixel cible sélectionné, une fenêtre cible de caractéristiques dimensionnelles choisies et contenant ladite région d'intérêt cible. On détermine alors dans la deuxième image, selon un critère de sélection prédéterminé, un ensemble de pixels et on génère autour de chaque pixel sélectionné une deuxième fenêtre de mêmes caractéristiques dimensionnelles que ladite fenêtre cible. On effectue un traitement de corrélation entre les niveaux de gris des pixels de chaque deuxième fenêtre et les niveaux de gris des pixels de la fenêtre cible de façon à obtenir une valeur de corrélation pour chaque deuxième fenêtre. On identifie alors la région d'intérêt homologue de la région d'intérêt cible à partir de l'analyse de l'ensemble des valeurs de corrélation ainsi obtenues. On minimise ainsi les risques d'erreur d'appariement entre des régions d'intérêt homologues.

Selon un mode de mise en oeuvre, l'analyse des valeurs de corrélation obtenues comporte la sélection d'un nombre choisi de maxima ou de minima de corrélation, la sélection de la région homologue s'effectuant parmi celles dont la valeur de corrélation associée est l'un de ces maxima ou minima de corrélation.

En fait suivant que l'image est "normale" ou inversée (une image "normale" étant définie comme présentant des niveaux de gris et des contrastes qui sont semblables à ceux habituellement visibles sur des clichés de film) on utilisera respectivement les maxima ou les minima.

On peut également prévoir une détermination de la dynamique des maxima ou minima sélectionnés, et la comparaison des valeurs de dynamique obtenues à un seuil.

Le traitement de corrélation utilisé peut comporter un traitement de corrélation normée, centrée ou non, ou bien un traitement de différence normée.

En variante à l'appariement évoqué ci-dessus, l'invention propose également un appariement basé sur l'élaboration de caractéristiques prédéterminées de toute région d'intérêt, en particulier des caractéristiques physiques comme l'élongation, le contraste, le gradient, puis une comparaison entre ces listes de caractéristiques associées à différentes régions d'intérêts.

Plus précisément, selon une caractéristique générale de l'invention, on sélectionne dans l'étape de sélection, un pixel cible dans ladite région d'intérêt cible et, dans l'étape d'appariement, on génère, autour du pixel cible sélectionné, une fenêtre cible de caractéristiques dimensionnelles choisies et contenant ladite région d'intérêt cible. On détermine pour ladite région d'intérêt cible, à partir des valeurs de niveau de gris des pixels de ladite fenêtre cible, un premier ensemble de valeurs numériques respectivement représentatives de caractéristiques prédéterminées caractérisant toute région d'intérêt (par exemple des caractéristiques de forme de contraste, de gradient ... ) et on stocke ce premier ensemble de valeurs numériques. On détermine dans la deuxième image, selon un critère de sélection prédéterminé, un ensemble de pixels appartenant respectivement à des régions d'intérêts dites candidates apparaissant dans la deuxième image et on génère autour de chacun de ces pixels sélectionnés une deuxième fenêtre contenant ladite région d'intérêt candidate correspondante. On détermine, pour chaque région d'intérêt candidate à partir des valeurs de niveau de gris des pixels de la deuxième fenêtre associée, un deuxième ensemble de valeurs numériques respectivement représentatives desdites caractéristiques prédéterminées et on stocke ce deuxième ensemble de valeurs numériques. On identifie alors la région d'intérêt homologue de la région d'intérêt cible à partir d'un traitement de comparaison entre le premier ensemble de valeurs numériques et chaque deuxième ensemble de valeurs numériques. On minimise également ainsi les risques d'erreur d'appariement entre des régions homologues.

Le traitement de comparaison peut comporter un traitement de minimisation de distance entre les deux ensembles de valeurs numériques.

Dans les deux variantes d'appariement qui viennent d'être évoquées, et afin de minimiser encore le temps de calcul, on détermine dans la deuxième image stéréotaxique, une zone épipolaire contenant au moins le segment épipolaire relatif au pixel cible. Les pixels de la zone épipolaire contiennent alors les pixels sélectionnés. Pour réduire encore le temps de calcul, au lieu d'effectuer l'appariement sur tous les pixels de la zone épipolaire déterminée, on sélectionne avantageusement les pixels de la deuxième image parmi ceux présentant des maxima ou des minima de niveau de gris dont la dynamique est supérieure à un seuil prédéterminé.

En outre, pour s'affranchir des problèmes de fond d'image, et pour minimiser encore les risques d'erreurs d'appariement entre deux régions d'intérêts homologues, il est particulièrement avantageux que l'appariement selon l'invention comporte préalablement un filtrage des images stéréotaxiques, par exemple du type dit "chapeau haut de forme".

L'utilisation de l'étape de reprojection des éléments d'intérêts candidats dans l'image de centrage est indépendante du type d'appariement utilisé préalablement.

Ainsi, selon une caractéristique générale de l'invention, le procédé de localisation du type de celui évoqué ci-avant comprend une sélection dans une première image stéréotaxique numérisée d'une première région d'intérêt dite cible, une sélection, dans une deuxième image stéréotaxique numérisée, à partir d'un premier appariement automatique, d'au moins une deuxième région d'intérêt susceptible d'être homologue de la région cible, la détermination de la position spatiale d'un pixel candidat d'un élément d'intérêt candidat correspondant à ces deux régions d'intérêts, la détermination de la position dans une troisième image stéréotaxique, d'un pixel projeté correspondant à la projection dans cette troisième image stéréotaxique du pixel candidat, et un deuxième appariement automatique entre la région intérêt cible et un voisinage du pixel projeté définissant une région d'intérêt projeté.

En pratique, on sélectionne avantageusement dans la deuxième image stéréotaxique, à partir dudit premier appariement automatique, un ensemble de deuxièmes régions susceptibles d'être homologues de la région cible et on détermine la position spatiale de chaque pixel candidat correspondant à chaque paire de régions d'intérêts formée par la région cible et l'une des deuxièmes régions. On détermine également la position dans la troisième image de chaque pixel projeté correspondant et on effectue le deuxième appariement automatique entre la région cible et un voisinage de chaque pixel projeté.

On peut ordonner l'ensemble des deuxièmes régions obtenues dans l'ordre décroissant de leur probabilité à être la région homologue de la région cible. On peut également ordonner l'ensemble des régions projetées obtenues dans l'ordre décroissant de leur probabilité à être la région homologue de la région cible. On sélectionne alors avantageusement la région homologue de la région cible comme étant celle dont le produit des rangs respectifs dans les deux ordonnancements est mininum.

Le premier appariement automatique peut être l'un des deux appariements qui ont été évoqués ci-avant, c'est-à-dire à base d'un traitement de corrélation ou d'un traitement de comparaison.

De même, le deuxième appariement automatique peut comporter un traitement de corrélation tel que défini ci-avant, entre le voisinage de chaque pixel projeté et une fenêtre cible contenant la région d'intérêt cible. Ce deuxième appariement automatique peut être également un traitement de comparaison tel que défini ci-avant, entre la région d'intérêt cible et chaque région d'intérêt projetée.

D'un point de vue matériel, l'invention s'analyse comme un dispositif de localisation d'un élément d'intérêt contenu dans un objet tridimensionnel à partir des positions de régions d'intérêts homologues correspondant audit élément d'intérêt et apparaissant dans un ensemble d'images stéréotaxiques dudit objet. Ce dispositif comporte un appareillage de prises de vues stéréotaxiques équipé d'un support pour ledit objet et d'un récepteur d'image tel qu'une caméra CCD capable de fournir des images stéréotaxiques numérisées. Il est également prévu des moyens de visualisation de ces images, par exemple un écran vidéo, tel que celui d'un microordinateur. Des moyens de sélection, par exemple une "souris" d'un microordinateur permettant de déplacer un marqueur sur l'écran et de "cliquer" ce marqueur sur un pixel cible d'une région d'intérêt, permettent la sélection du pixel cible. Il est enfin prévu un microprocesseur et des mémoires associées pour incorporer sous forme logicielle des moyens permettant de réaliser fonctionnellement toutes les étapes des procédés qui ont été décrites ci-avant.

D'autres avantages et caractéristiques de l'invention apparaîtront à l'examen de modes de mise en oeuvre nullement limitatifs, et des dessins annexés, sur lesquels :

    la figure 1 est une vue schématique de trois images stéréotaxiques d'un objet tridimensionnel à partir d'un dispositif de prises de vues stéréotaxiques;
    la figure 2 illustre très schématiquement la notion de segment épipolaire;

la figure 3 illustre une zone épipolaire choisie conformément à l'invention pour effectuer un appariement;

la figure 4 est un organigramme général d'un procédé selon l'invention;

la figure 5 illustre plus particulièrement une étape d'une variante du procédé utilisant un traitement de corrélation; et

la figure 6 illustre schématiquement plus particulièrement un procédé selon l'invention utilisant une reprojection sur l'image de centrage.

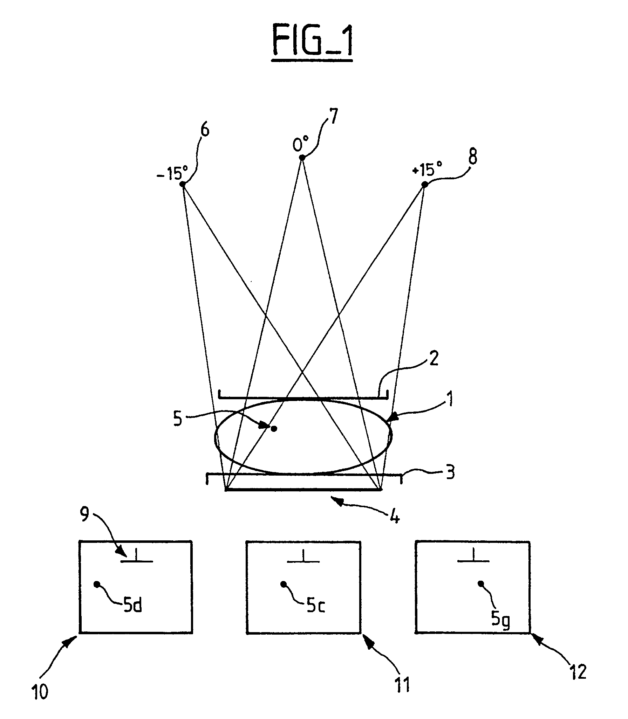

Un examen stéréotaxique, en particulier en mammographie, se compose d'une série de trois expositions d'un objet tridimensionnel 1 (figure 1), par exemple un sein, reposant sur un support 3 et comprimé par un plateau de compression 2, à l'aide d'un tube à rayons X occupant respectivement trois positions différentes 6, 7 et 8. En pratique, on procède à une exposition selon un angle de 0° et à deux expositions angulées selon deux angles opposés égaux, en pratique ±15°.

Un récepteur CCD 4 permet d'obtenir ainsi trois images stéréotaxiques numérisées 10, 11 et 12. Selon une convention habituellement utilisée, l'image 10 est l'image de droite, tandis que l'image 12 est l'image de gauche et que l'image 11 est l'image de centrage.

Un élément d'intérêt 5, par exemple une microcalcification, contenu dans l'objet tridimensionnel 1, fournit sur chacune des images 10, 11 et 12 des régions d'intérêts respectivement référencées 5d, 5c et 5g. L'image de centrage sert en particulier à vérifier que la microcalcification sera accessible durant l'acte médical éventuel ultérieur.

Les coordonnées tridimensionnelles de la microcalcification 5 peuvent être obtenues, de façon classique et bien connue de l'homme du métier, par un calcul simple de trigonométrie à partir de la connaissance des coordonnées bidimensionnelles des deux projections 5d et 5g, par exemple. Ces coordonnées sont exprimées par rapport à une origine matérialisée par le centre d'une croix 9 gravée sur le plateau supportant le sein. Et on repère sur chaque image le centre de cette croix de référence pour initialiser géométriquement le système.

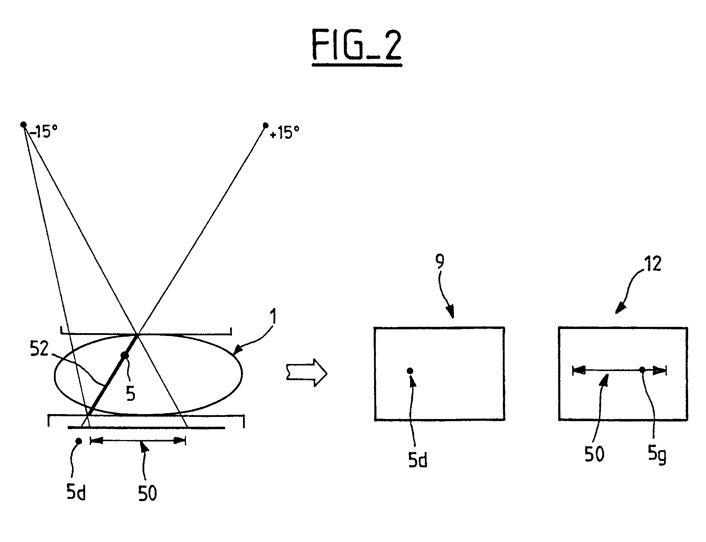

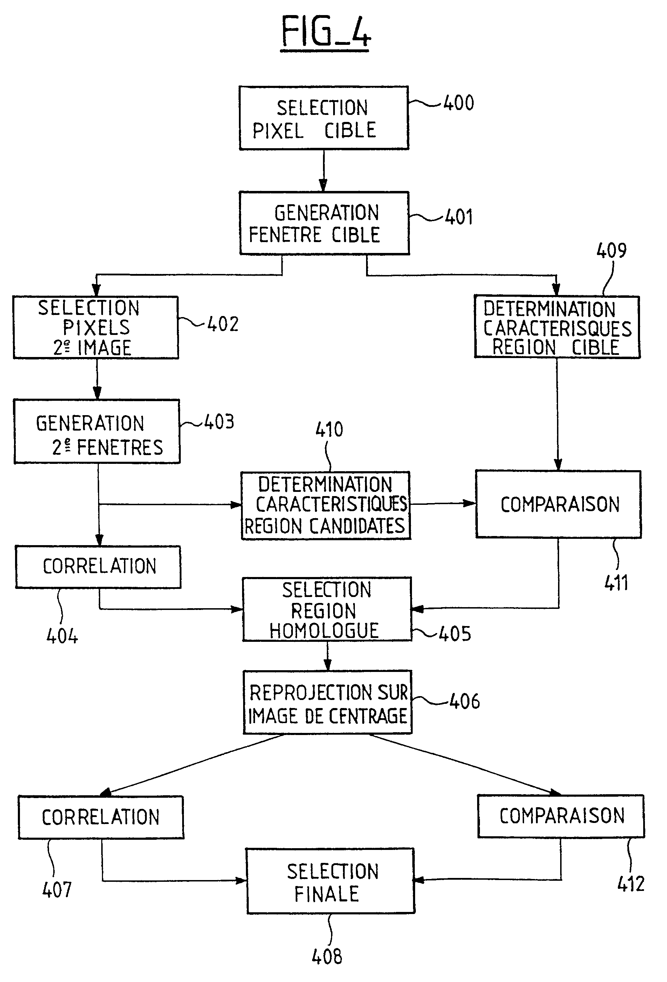

L'homme du métier sait que, par définition, le segment épipolaire 50 (figure 2) d'un point 5d d'une image 9 d'angulation $\theta 1$, sur une image 12 d'angulation $\theta 2$, correspond à l'ensemble des points de la seconde image 12 pouvant avoir le point 5d comme antécédent. Autrement dit, c'est la projection conique par la source d'angulation $\theta 2$, du segment de droite 52 joignant ledit point à la source d'angulation $\theta 1$.

Dans le cas où les images stéréotaxiques ont été obtenues avec des angulations telles que les positions du tube à rayons X se situent dans un plan parallèle aux lignes des images, ce segment épipolaire 50 est un segment de droite qui se trouve être parallèle aux lignes de l'image. Cependant, si l'on n'a pas la connaissance de l'épaisseur de l'objet tridimensionnel, on ne peut pas déterminer la position des extrémités de ce segment épipolaire. Ce segment épipolaire devient alors une droite épipolaire qui, dans la géométrie d'acquisition particulière évoquée ici, se situe sur la même ligne d'image 12 que le point d'intérêt 5d sur l'image 9.

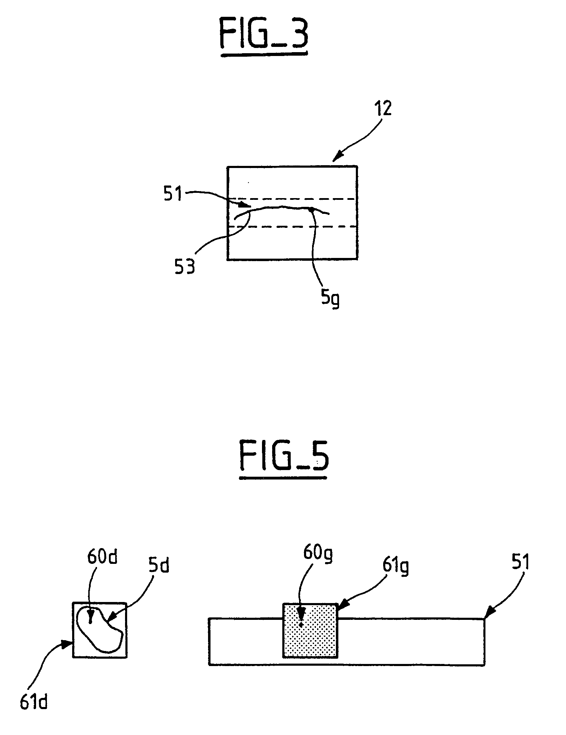

En outre, lorsqu'on utilise un détecteur qui présente des distorsions géométriques, la droite épipolaire se transforme en une courbe épipolaire 53 (figure 3). On peut déterminer les coordonnées de l'ensemble des points de la courbe épipolaire sur l'image 12 par une calibration géométrique de la caméra CCD. Il serait alors possible de n'effectuer l'appariement selon l'invention que sur l'ensemble de ces points.

Cependant, si pour des raisons de précision de la calibration géométrique, on ne peut déterminer qu'approximativement les coordonnées des points de la courbe épipolaire, on choisira alors d'effectuer l'appariement selon l'invention sur un ruban épipolaire 51 qui encadre la courbe épipolaire. En pratique, on définira une zone épipolaire, ou zone de recherche, délimitée par deux lignes parallèles passant respectivement par deux points augmentés de part et d'autre du point le plus haut et le plus bas de l'épipolaire 53 d'une marge prédéterminée. Généralement, on opte pour une marge de 3 à 5 pixels.

On va maintenant décrire plus en détail, en se référant plus particulièrement aux figures 4 et 5, deux types d'appariement selon l'invention.

La première étape consiste en la sélection (étape 400) d'un pixel cible 60d au sein d'une région d'intérêt cible 5d présente par exemple dans l'image de droite 10, dite image cible. En pratique, cette sélection peut s'effectuer manuellement en cliquant un point de la région d'intérêt de l'image concernée apparaissant sur un écran d'un microordinateur. Ceci étant, on peut prévoir également un procédé de sélection automatique de pixel. Ce pixel 60d peut être centré ou non dans la région cible.

On génère ensuite (étape 401) une fenêtre cible 61d contenant ladite région d'intérêt cible. Cette fenêtre cible peut être générée automatiquement après avoir appliqué sur le pixel cible 60d un moyen logiciel classique de croissance de région. En variante, on peut également prévoir, selon le domaine d'application de l'invention, de choisir des fenêtres de taille prédéfinies. Dans tous les cas, on obtiendra généralement une fenêtre cible rectangulaire ou carrée dont les côtés présentent des dimensions de l'ordre d'une dizaine à quelques dizaines de pixels.

Les niveaux de gris de chacun des pixels de cette fenêtre cible sont ensuite stockés dans une mémoire associée à un microprocesseur qui incorpore de façon logicielle tous les moyens fonctionnels de mise en oeuvre du procédé décrit.

A partir de là, on va sélectionner dans une étape 402 un ensemble de pixels dans une deuxième image stéréotaxique, par exemple l'image de gauche. Cet ensemble de pixels sélectionnés va constituer une zone de recherche 51 à l'intérieur de laquelle on va sélectionner une ou plusieurs régions d'intérêts candidates susceptibles d'être homologues de la région d'intérêt cible.

Comme on l'a expliqué ci-avant et dans le but de réduire la durée d'appariement, cette zone de recherche 51 sera par exemple la zone épipolaire 51 définie ci-avant. Plus précisément, autour de chacun de ces pixels sélectionnés dans la zone de recherche, on génère (étape 403) une deuxième fenêtre 61g de même caractéristique dimensionnelle que la fenêtre cible. On stocke les niveaux de gris des pixels de chaque deuxième fenêtre et on procède (étape 404) à un traitement de corrélation entre les niveaux de gris des pixels de chaque deuxième fenêtre 61g et les niveaux de gris des pixels de la fenêtre cible 61d.

Le traitement de corrélation permet donc d'effectuer une mesure de similarité entre la fenêtre cible et chacune des deuxièmes fenêtres de la deuxième image de façon à obtenir une valeur de similarité (valeur de corrélation entre ces deux fenêtres).

C'est à partir de l'analyse de ces valeurs de corrélation que l'on va procéder à l'appariement de la région d'intérêt cible avec sa région d'intérêt homologue.

En ce qui concerne le traitement de corrélation (étape 404), on peut utiliser une corrélation normée. Plus précisément, chaque valeur de corrélation d'une deuxième fenêtre sera alors donnée par la formule :

$$\frac{\sum\limits_{k=1}^{N} I(k)\,J(k)}{\sqrt{\sum I^2(k)\,\sum J^2(k)}} = \frac{\vec{I}\cdot\vec{J}}{\|\vec{I}\|\ \|\vec{J}\|}$$

où N est le nombre de pixels d'une fenêtre, k l'indice courant d'un pixel, I(k) le niveau de gris du pixel k de la fenêtre cible et J(k) le niveau de gris du pixel k de la deuxième fenêtre.

On peut également utiliser une différence normée permettant d'obtenir la valeur de corrélation par la formule :

$$\|\vec{I} - \vec{J}\|^2$$

En théorie, la région d'intérêt homologue sera celle contenue dans la deuxième fenêtre qui présente la valeur de corrélation maximale. Ceci étant, en pratique, plusieurs maxima de corrélation peuvent être trouvés avec une intensité élevée. On sélectionne alors (étape 405), parmi l'ensemble des valeurs de corrélation, un ensemble restreint de maxima de corrélation selon un critère prédéterminé comme l'intensité du maximum ou comme le nombre de maxima dans la liste des valeurs de corrélation rangées par ordre d'intensité décroissante.

On peut également utiliser comme critère supplémentaire de sélection une détermination de la dynamique des maxima sélectionnés et la comparaison des valeurs de dynamique obtenues à un seuil prédéterminé.

La détermination de la dynamique de maxima est parfaitement connue de l'homme du métier. Cependant, celui-ci pourra éventuellement se reporter à la demande de brevet français n° 91 15308 pour plus de détails concernant une telle détermination de dynamique.

Il convient de noter ici que le procédé selon l'invention permet de déterminer et d'afficher sur l'écran du microordinateur, par exemple par un clignotement, la région d'intérêt considérée comme étant la région homologue de la région cible, et ce avec le minimum de risque d'erreur.

Ceci étant, en pratique, le procédé selon l'invention pourra sélectionner un nombre restreint de régions d'intérêts candidates susceptibles d'être homologues de la région cible. Le radiologue aura alors la possibilité de sélectionner manuellement celle qu'il considère comme étant effectivement la région homologue.

Ainsi qu'on l'a évoqué ci-avant, on peut utiliser dans le traitement d'appariement, un traitement de comparaison spécifique au lieu d'un traitement de corrélation.

Ainsi, comme illustré plus précisément sur la figure 4, on détermine (étape 409) pour la région cible contenue à l'intérieur de la fenêtre cible 61d, et à partir des niveaux de gris des pixels contenus dans cette fenêtre cible, une liste de caractéristiques permettant de caractériser en général une région d'intérêt. Ces caractéristiques peuvent comporter par exemple une valeur représentative de l'élongation de la région d'intérêt, une valeur représentative de sa largeur moyenne, une largeur représentative de son niveau de gris moyen, ou de son gradient moyen d'intensité.

On effectue la même opération (étape 410) pour les régions d'intérêts candidates contenues dans des deuxièmes fenêtres 61g définies à partir de pixels sélectionnés dans la zone de recherche. A cet égard, afin de limiter le temps de traitement, les pixels sélectionnés pour la détermination des deuxièmes fenêtres englobant les régions candidates, sont choisis parmi les pixels de la zone de recherche présentant des maxima de niveaux de gris dont la dynamique est supérieure à un seuil prédéterminé.

A partir de ces différentes listes de caractéristiques ainsi obtenues, on effectue un traitement de comparaison 411 entre la liste de caractéristiques affectées à la région cible et chacune des listes de caractéristiques affectées à chacune des régions candidates.

En pratique, bien qu'on puisse envisager un autre type de traitement de comparaison, on utilisera de préférence un traitement de comparaison prévoyant la minimisation d'une distance, par exemple la distance euclidienne, entre la liste des caractéristiques de la région cible, considérée alors comme un vecteur, et une liste de caractéristiques d'une région candidate, considérée également comme un vecteur.

On pourrait également prévoir, à titre d'exemple, de déterminer la valeur moyenne des valeurs absolues des différences entre les valeurs homologues de deux listes de caractéristiques, et de rechercher celle des valeurs moyennes qui est la plus faible pour en déduire la région d'intérêt homologue.

La sélection de la région homologue prévue dans l'étape 405 s'obtient donc par cette variante en minimisant une distance entre des listes de caractéristiques plutôt qu'en maximisant une corrélation normée ou une différence normée.

L'invention prévoit encore certaines améliorations.

Ainsi, dans la variante de l'appariement prévoyant un traitement de corrélation, on peut limiter la zone de recherche aux pixels de la zone épipolaire présentant des maxima de niveaux de gris dont la dynamique est supérieure à un seuil prédéterminé.

En outre, il est préférable, notamment pour s'affranchir des problèmes de fond d'image, d'effectuer un filtrage préalable des images stéréotaxiques du type dit "chapeau haut de forme" (ou transformation top-hat en langue anglaise). Ce genre de filtrage est connu de l'homme du métier et celui-ci pourra se référer pour plus de détails à l'article de J. SERRA Image Analysis and Mathematical Morphology, Vol. 2, Academic Press 1988.

Ce genre de filtrage permet d'extraire d'une image numérique les zones claires et étroites et permet de s'affranchir du fond.

Les étapes du procédé selon l'invention qui vont maintenant être décrites, et prévoyant notamment une reprojection sur l'image de centrage, s'apparentent ainsi notamment comme étant une vérification des résultats de l'appariement précédent entre l'image cible et la deuxième image, et permettent ainsi de minimiser encore les risques d'erreurs d'appariement.

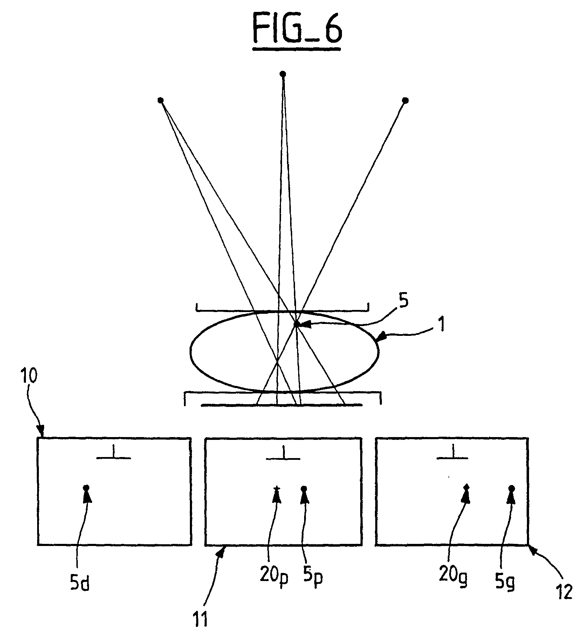

Ceci étant, bien que la suite du procédé qui va maintenant être décrite en se référant plus particulièrement aux figures 4 et 6, prévoit la possibilité d'utiliser des traitements de corrélation ou de comparaison du type de ceux qui viennent d'être décrits, ce procédé selon l'invention utilisant une reprojection sur l'image de centrage, est indépendant de l'appariement préalable utilisé entre l'image cible et la deuxième image.

On suppose maintenant (figure 6) que le procédé selon l'invention a permis de sélectionner sur l'image de gauche 12 deux régions d'intérêts candidates 5g et 20g susceptibles d'être la région homologue de la région cible 5d apparaissant sur l'image cible 10.

A partir du pixel cible de la région d'intérêt cible et du pixel candidat ayant donné lieu à la sélection de la région d'intérêt candidate 5g, on détermine (étape 406), par un calcul trigonométrique de stéréotaxie, et connaissant la géométrie du dispositif de stéréotaxie, les coordonnées tridimensionnelles du point correspondant de l'objet d'intérêt candidat correspondant à ces deux régions 5d et 5g. Puis, par un calcul trigonométrique de stéréotaxie inverse, on détermine les coordonnées dans l'image de centrage du pixel projeté correspondant à la projection du pixel de l'élément candidat dans cette image de centrage.

On remarque donc que, dans le cas présent, puisque la région candidate 5g est effectivement la région homologue de la région 5d, la position du pixel projeté dansé l'image de centrage 11 correspond effectivement à une région d'intérêt projeté 5p qui est effectivement la projection dans cette image de centrage de l'élément d'intérêt 5.

Par contre, par ces mêmes calculs, la région d'intérêt candidate 20g va conduire à l'obtention d'une position projetée 20p dans l'image de centrage qui, dans le cas présent, ne se superposera à aucune région d'intérêt physiquement présente dans cette image de centrage.

Aussi, un traitement de corrélation entre la fenêtre cible contenant la région cible 5d et un voisinage du pixel projeté contenant la région d'intérêt projetée 5p va donner une valeur de corrélation supérieure à la valeur de corrélation obtenue entre la fenêtre cible 5d et un voisinage du pixel projeté 20p. Il en aurait été de même, même si le voisinage du point projeté 20p avait correspondu à une microcalcification projetée autre que celle correspondant effectivement à la microcalcification 5.

Ce procédé permet donc de sélectionner parmi les deux candidats 5g et 20g la région 5g qui est effectivement la région homologue de la région 5d.

Bien entendu, la conclusion aurait été la même en utilisant un traitement de comparaison 412 au lieu d'un traitement de corrélation 407.

L'utilisation d'un voisinage du pixel projeté, typiquement quelques pixels autour du point projeté, permet de prendre en compte les erreurs éventuelles dues à un bougé de l'objet entre l'exposition à 0°et les expositions à ±15°.

D'une façon plus générale, on peut ordonner l'ensemble des régions candidates obtenues dans la deuxième image dans l'ordre décroissant de leur probabilité à être la région homologue de la région cible. Ainsi, la région ayant par exemple donné le maximum de corrélation avec la dynamique la plus forte sera affectée du rang 1 et ainsi de suite par ordre décroissant. On peut effectuer ce même ordonnancement pour l'ensemble des régions projetées obtenues sur l'image de centrage. On sélectionnera alors la région homologue de la région cible comme étant celle dont le produit des rangs respectifs dans les deux ordonnancements est minimum.

## Revendications

1. Procédé de localisation d'un élément d'intérêt contenu dans un objet tridimensionnel à partir des positions de régions d'intérêts homologues correspondant audit élément d'intérêt et apparaissant dans un ensemble d'images stéréotaxiques numérisées dudit objet, comportant une sélection dans une première image stéréotaxique (10) d'une première région d'intérêt (5d) dite "cible", ainsi qu'un appariement de ladite première région avec une deuxième région d'intérêt (5g) homologue de la première et apparaissant dans une deuxième image stéréotaxique (12), et un traitement de corrélation de pixels dans des fenêtres de l'ensemble d'images stéréotaxiques correspondant aux régions d'intérêts, et un traitement de corrélation entre les fenêtres **caractérisé par le fait qu'**on sélectionne (400) dans l'étape de sélection, un pixel cible (60d) dans ladite région d'intérêt cible (5d), et dans l'étape d'appariement, on génère (401), autour du pixel cible sélectionné, une fenêtre cible (61d) de caractéristiques dimensionnelles choisies et contenant ladite région d'intérêt cible, on détermine (402) dans la deuxième image, selon un critère de sélection prédéterminé, un ensemble de pixels, on génère (403) autour de chaque pixel sélectionné une deuxième fenêtre de mêmes caractéristiques dimensionnelles que ladite fenêtre cible, on effectue un traitement de corrélation (404) entre les niveaux de gris des pixels de chaque deuxième fenêtre et les niveaux de gris des pixels de la fenêtre cible, de façon à obtenir une valeur de corrélation pour chaque deuxième fenêtre, et on identifie la région d'intérêt homologue de la région d'intérêt cible à partir de l'analyse de l'ensemble des valeurs de corrélation ainsi obtenues, de façon à minimiser les risques d'erreur d'appariement entre les régions d'intérêt homologues.

2. Procédé selon la revendication 1, **caractérisé par le fait que** l'analyse des valeurs de corrélation obtenues comporte la sélection d'un nombre choisi de maxima ou de minima de corrélation, la sélection de la région d'intérêt homologue s'effectuant parmi celles dont la valeur de corrélation associée est l'un de ces maxima ou minima de corrélation.

3. Procédé selon la revendication 2, **caractérisé par le fait que** l'analyse des valeurs de corrélation obtenues comporte en outre une détermination de la dynamique des maxima ou minima sélectionnés, et la comparaison des valeurs de dynamique obtenues à un seuil.

4. Procédé selon l'une des revendications 1 à 3, **caractérisé par le fait que** le traitement de corrélation comporte un traitement de corrélation normée.

5. Procédé selon l'une des revendications 1 à 3, **caractérisé par le fait que** le traitement de corrélation comporte un traitement de différence normée.

6. Procédé selon l'une des revendications précédentes (12), **caractérisé par le fait qu'**on détermine (409), pour ladite région d'intérêt cible, à partir des valeurs de niveaux de gris des pixels de ladite fenêtre cible, un premier ensemble de valeurs numériques respectivement représentatives de caractéristiques prédéterminées caractérisant toute région d'intérêt, et on stocke ce premier ensemble de valeurs numériques, on détermine (402) dans la deuxième image, selon un critère de sélection prédéterminé, un ensemble de pixels appartenant respectivement à des régions d'intérêt dites "candidates" apparaissant dans la deuxième image, et on génère (403) autour de chacun de ces pixels sélectionnés une deuxième fenêtre contenant ladite région d'intérêt candidate correspondante, on détermine (410), pour chaque région d'intérêt candidate, à partir des valeurs de niveaux de gris des pixels de la deuxième fenêtre associée, un deuxième ensemble de valeurs numériques respectivement représentatives desdites caractéristiques prédéterminées, on stocke ce deuxième ensemble de valeurs numériques, et on identifie la région d'intérêt homologue de la région d'intérêt cible à partir d'un traitement de comparaison (411) entre ledit premier ensemble de valeurs numériques et chaque deuxième ensemble de valeurs numériques, de façon à minimiser les risques d'erreur d'appariement entre les régions d'intérêt homologues.

**7.** Procédé selon la revendication 6, **caractérisé par le fait que** lesdites caractéristiques prédéterminées comprennent des caractéristiques de forme, de contraste, de gradient.

**8.** Procédé selon la revendication 6 ou 7, **caractérisé par le fait que** le traitement de comparaison comporte un traitement de minimisation de distance entre les deux ensembles de valeurs numériques.

**9.** Procédé selon l'une des revendications précédentes, **caractérisé par le fait qu'**on détermine dans la deuxième image stéréotaxique une zone épipolaire contenant au moins le segment épipolaire relatif au pixel cible, et **par le fait que** les pixels de la zone épipolaire contiennent les pixels sélectionnés.

**10.** Procédé selon l'une des revendications précédentes, **caractérisé par le fait que** lesdits pixels sélectionnés sont choisis parmi les pixels de la deuxième image présentant des maxima ou minima de niveaux de gris dont la dynamique est supérieure à un seuil prédéterminé.

**11.** Procédé selon l'une des revendications précédentes, **caractérisé par le fait que** l'appariement comporte préalablement un filtrage des images stéréotaxiques, en particulier du type dit "chapeau haut de forme".

**12.** Procédé de localisation d'un élément d'intérêt contenu dans un objet tridimensionnel à partir des positions de régions d'intérêts homologues correspondant audit élément, d'intérêt et apparaissant dans un ensemble d'images stéréotaxiques numérisées dudit objet, **caractérisé par le fait qu'**il comprend une sélection dans une première image stéréotaxique (10) d'une première région d'intérêt (5d) dite "cible", une sélection (405), dans une deuxième image stéréotaxique (12), à partir d'un premier appariement automatique, d'au moins une deuxième région d'intérêt (5g) suceptible d'être homologue de la région cible, la détermination de la position spatiale d'un pixel candidat d'un élément d'intérêt candidat correspondant à ces deux régions d'intérêt, la détermination (406) de la position dans une troisième image stéréotaxique, d'un pixel projeté correspondant à la projection dans cette troisième image stéréotaxique du pixel candidat, et un deuxième appariement automatique entre la région d'intérêt cible et un voisinage du pixel projeté définissant une région d'intérêt projetée, de façon à minimiser les risques d'erreur d'appariement entre les régions d'intérêt homologues.

**13.** Procédé selon la revendication 12, **caractérisé par le fait qu'**on sélectionne dans la deuxième image stéréotaxique, à partir dudit premier appariement automatique, un ensemble de deuxièmes régions susceptibles d'être homologues de la région cible, on détermine la position spatiale de chaque pixel candidat correspondant à chaque paire de régions d'intérêt formée par la région cible et l'une des deuxièmes régions, ainsi que la position dans la troisième image de chaque pixel projeté correspondant, et on effectue le deuxième appariement automatique entre la région cible et un voisinage de chaque pixel projeté.

**14.** Procédé selon la revendication 13, **caractérisé par le fait qu'**on ordonne l'ensemble des deuxièmes régions obtenues dans l'ordre décroissant de leur probabilité à être la région homologue de la région cible, on ordonne l'ensemble des régions projetées obtenues dans l'ordre décroissant de leur probabilité à être la région homologue de la région cible, et on sélectionne la région homologue de la région cible comme étant celle dont le produit des rangs respectifs dans les deux ordonnancements est minimum.

**15.** Procédé selon l'une des revendications 12 à 14, **caractérisé par le fait que** le premier appariement automatique est un appariement tel que défini dans l'une des revendications 1 à 11.

**16.** Procédé selon l'une des revendications 12 à 15, **caractérisé par le fait que** le deuxième appariement automatique comporte un traitement de corrélation tel que défini dans l'une des revendications 1 à 5, entre le voisinage de chaque pixel projeté et une fenêtre cible contenant la région d'intérêt cible, ou un traitement de comparaison, tel que défini dans l'une des revendications 6 à 11 entre la région d'intérêt cible et chaque région d'intérêt projetée.

**Patentansprüche**

**1.** Verfahren zur Lokalisierung eines in einem drei-dimensionalen Objekt enthalten Elements von Interesse, ausgehend von Positionen von homologen Gebieten von Interesse, die dem besagten Element von Interesse entsprechen und in einer Gesamtheit digitalisierter, stereotaxischer Abbildungen des besagten Objekts erscheinen, umfassend die folgenden Schritte: eine Auswahl eines ersten sogenannten "Ziel"-Gebietes von Interesse (5d) in einer ersten stereotaxischen Abbildung (10) sowie das Anpassen eines zweiten Gebietes von Interesse (5g), das homolog zum ersten ist und in einer zweiten stereotaxischen Abbildung (12) erscheint, passend zu besagtem ersten Gebiet; eine Anwendung eines Korrelationsverfahrens auf Pixel in den Gebieten von Interesse entsprechenden Fenstern der Gesamtheit stereotaxischer Abbildungen und eine Anwendung eines Korrelationsverfahren zwischen den Fenstern; **dadurch gekennzeichnet dass** im Auswahlschritt in dem Zielgebiet von Interesse (5d) ein Zielpixel (60d) ausgewählt (400) wird; im Schritt des Anpassens um den ausgewählten Zielpixel herum ein das besagte Zielgebiet enthaltendes Zielfenster (61d) mit gewählten charakteristischen Abmessungen generiert wird; in der zweiten Abbildung nach einem vorbestimmten Auswahlkriterium eine Gesamtheit von Pixeln bestimmt (402) wird; um jeden ausgewählten Pixel ein zweites Fenster mit denselben charakteristischen Abmessungen wie das besagte Zielfenster generiert (403) wird; zwischen den Graustufen-Werten der Pixel jedes zweiten Fensters und den Graustufen-Werten der Pixel des Zielfensters ein Korrelationsverfahren ausgeführt (404) wird, wobei für jedes zweite Fenster ein Korrelationswert erhalten wird; und, ausgehend von der Analyse der Gesamtheit der so erhaltenen Korrelationswerte, das zu dem Zielgebiet von Interesse homologe Gebiet von Interesse identifiziert wird, wobei die Risiken von Fehlern des Anpassens zwischen den homologen Gebieten von Interesse minimalisiert werden.

2. Verfahren nach Anspruch 1, **dadurch gekennzeichnet dass** die Analyse der erhaltenen Korrelationswerte die Auswahl einer ausgewählten Anzahl von Maximumwerten und Minimumwerten der Korrelation umfasst, wobei die Auswahl des homologen Gebietes von Interesse unter denjenigen erfolgt, deren zugehöriger Korrelationswert entweder der Maximumwert oder der Minimumwert der Korrelation ist.

3. Verfahren nach Anspruch 2, **dadurch gekennzeichnet dass** die Analyse der erhaltenen Korrelationswerte ausserdem eine Bestimmung des dynamischen Bereichs der ausgewählten Maximumwerte und Minimumwerte, und den Vergleich der erhaltenen Werte der dynamischen Bereiche mit einem Schwellwert umfasst.

4. Verfahren nach einem der Ansprüche 1 bis 3, **dadurch gekennzeichnet dass** das Korrelationsverfahren ein normalisiertes Korrelationsverfahren umfasst.

5. Verfahren nach einem der Ansprüche 1 bis 3, **dadurch gekennzeichnet dass** das Korrelationsverfahren ein normalisiertes Differenzverfahren umfasst.

6. Verfahren nach einem der vorhergehenden Ansprüche, **dadurch gekennzeichnet dass** für das besagte Zielgebiet von Interesse, ausgehend von den Graustufen-Werten der Pixel des Zielfensters, eine erste Gesamtheit von numerischen Werten bestimmt wird, wobei die numerischen Werte jeweils repräsentativ für jedes Gebiet von Interesse kennzeichnende, vorbestimmte Kennzeichen sind; und diese erste Geasmtheit von numerischen Werten gespeichert wird; in dem zweiten Bild eine Gesamtheit von Pixeln nach einem vorbestimmten Auswahlkriterium bestimmt (402) wird, wobei die Pixel sogenannten "Prüf"-Gebieten von Interesse, die jeweils im zweiten Bild erscheinen, zugeordnet sind; und um jeden dieser ausgewählten Pixel herum ein das besagte entsprechende Prüfgebiet von Interesse beinhaltendes zweites Fenster generiert (403) wird; für jedes Prüfgebiet von Interesse, ausgehend von den Graustufen-Werten der Pixel im zweiten zugehörigen Fenster, eine zweite Gesamtheit von für die besagten vorbestimmten Kennzeichen jeweils repräsentativen numerische Werte bestimmt wird; diese zweite Gesamt von numerischen Werten gespeichert wird; und ausgehend von einem Vergleichsverfahren (411) zwischen der besagten ersten Gesamtheit von numerischen Werten und jeder zweiten Gesamtheit von numerischen Werten das zum "Ziel"-Gebiet von Interesse homologe Gebiet von Interesse identifiziert wird, wobei die Risiken von Fehlern des Anpassens zwischen den homologen Gebieten von Interesse minimalisiert werden.

7. Verfahren nach Anspruch 6, **dadurch gekennzeichnet dass** die besagten vorbestimmten Kennzeichen Kennzeichen der Form, des Kontrasts oder des Gradienten umfassen.

8. Verfahren nach Anspruch 6 oder 7, **dadurch gekennzeichnet dass** das Vergleichsverfahren ein Verfahren zur Minimalisierung des Abstandes zwischen den beiden Gesamtheiten der numerischen Werte umfasst.

9. Verfahren nach einem der vorhergehenden Ansprüche, **dadurch gekennzeichnet dass** in der zweiten stereotaxischen Abbildung eine epipolare Zone, die mindestens das zum "Ziel"-Pixel epipolare Segment enthält, bestimmt wird, und dass die Pixel der epipolaren Zone die ausgewählten Pixel enthalten.

10. Verfahren nach einem der vorhergehenden Ansprüche, **dadurch gekennzeichnet dass** die ausgewählten Pixel aus denjenigen Pixeln der zweiten Abbildung gewählt sind, die Maximumwerte oder Minimumwerte der Graustufen-Werte aufweisen, deren Dynamik größer als ein vorbestimmter Schwellwert ist.

**11.** Verfahren nach einem der vorhergehenden Ansprüche, **dadurch gekennzeichnet dass** das Anpassen ein vorhergehendes Filtern der stereotaxischen Bilder, insbesondere vom Typ der sogenannten "Zylinderhut-Transformation", umfasst.

**12.** Verfahren zum Lokalisieren eines in einem dreidimensionalen Bild enthaltenen Elements von Interesse, ausgehend von Positionen von homologen Gebieten, die dem besagten Element von Interesse entsprechen und in einer Gesamtheit digitalisierter, stereotaxischer Abbildungen des besagten Objekts erscheinen, **dadurch gekennzeichnet dass** es umfasst: eine Auswahl eines ersten sogenannten "Ziel"-Gebiets von Interesse (5d) in einer ersten stereotaxischen Abbildung (10); ausgehend von einem ersten automatischen Anpassen; in einer zweiten stereotaxischen Abbildung (12) eine Auswahl (405) von mindestens einem zum "Ziel"-Gebiet möglicherweise homologen, zweiten Gebiet von Interesse (5g), wobei die Bestimmung der räumlichen Position eines Prüf-Pixels eines Prüf-Elements von Interesse diesen beiden Gebieten von Interesse entspricht; in einer dritten stereotaxischen Abbildung die Bestimmung (406) der Position eines der Projektion des Prüfpixels in diese dritte stereotaxische Abbildung entsprechenden, projezierten Pixels; und ein zweites automatisches Anpassen zwischen dem Zielgebiet und einer ein projeziertes Zielgebiet definierenden Umgebung des projezierten Pixels, wobei die Risiken von Fehlern des Anpassens zwischen den homologen Gebieten von Interesse minimalisiert werden.

**13.** Verfahren nach Anspruch 12, **dadurch gekennzeichnet dass** in der zweiten stereotaxischen Abbildung, ausgehend von besagtem ersten automatischen Anpassen, eine Gesamtheit von zu dem Zielgebiet möglicherweise homologen, zweiten Gebieten ausgewählt wird; die räumliche Position jedes Prüfpixels entsprechend eines jeden, aus dem Zielgebiet und einem der zweiten Gebiete gebildeten Paares von Gebieten von Interesse, als auch die Position jedes entsprechenden projezierten Pixels in der dritten stereotaxischen Abbildung bestimmt wird; und das zweite automatische Anpassen zwischen dem Zielgebiet und einer Umgebung eines jeden projezierten Pixels ausgeführt wird.

**14.** Verfahren nach Anspruch 13, **dadurch gekennzeichnet dass** die Gesamtheit der erhaltenen zweiten Gebiete in abnehmender Reihenfolge bezüglich ihrer Wahrscheinlichkeit, das zum Zielgebiet homologe Gebiet zu sein, geordnet wird; die Gesamtheit der erhaltenen projezierten Gebiete in abnehmender Reihenfolge bezüglich ihrer Wahrscheinlichkeit, das zum Zielgebiet homologe Gebiet zu sein, geordnet wird; und das zum Zielgebiet homologe Gebiet als dasjenige ausgewählt wird, dessen Produkt der Ränge in den beiden geordneten Gesamtheiten ein Minimum ist.

**15.** Verfahren nach einem der Ansprüche 13 oder 14, **dadurch gekennzeichnet dass** das erste automatische Anpassen ein Anpassen, wie in einem der Ansprüche 1 bis 11 definiert, ist.

**16.** Verfahren nach einem der Ansprüche 12 bis 15, **dadurch gekennzeichnet dass** das zweite automatische Anpassen ein

## Claims

**1.** Method for locating an element of interest contained in a three-dimensional object on the basis of the positions of homologous regions of interest corresponding to the element of interest and appearing in a set of stereotaxic digitized images of the object, including a selection in a first stereotaxic image (10) of a first so-called "target" region of interest (5d), as well as a matching of the first region with a second region of interest (5g), homologous to the first and appearing in a second stereotaxic image (12), applying a correlation process to pixels in windows of the set of stereotaxic images corresponding to the regions of interest and applying a correlation process between the windows, **characterized in that** a target pixel (60d) in the target region of interest (5d) is selected (400) in the selection step and, in the matching step, a target window (61d) of chosen dimensional characteristics and containing the said target region of interest is generated (401) around the selected target pixel, a set of pixels is determined (402) in the second image, according to a predetermined selection criterion, a second window, of the same dimensional characteristics as the said target window, is generated (403) around each selected pixel, a correlation processing (404) between the gray-scale levels of the pixels in each second window and the gray-scale levels of the pixels in the target window is carried out so as to obtain a correlation value for each second window, and the region of interest homologous to the target region of interest is identified on the basis of the analysis of the set of correlation values thus obtained, so as to minimize the risks of matching error between the homologous regions of interest.

**2.** Method according to claim 1 **characterized in that** the analysis of the correlation values obtained includes the selection of a certain number of correlation maxima or minima, the homologous region of interest being selected from those whose associated correlation value is one of these correlation maxima or minima.

**3.** Method according to claim 2, **characterized in that** the analysis of the correlation values obtained furthermore includes a determination of the dynamic range of the maxima or minima selected, and the comparison of the values of the dynamic range obtained with a threshold.

**4.** Method according to one of claims 1 to 3, **characterized in that** the correlation processing includes a normalized correlation processing.

**5.** Method according to one of claims 1 to 3, **characterized in that** the correlation processing includes a normalized difference processing.

**6.** Method according to any one of the preceding claims **characterized in that** a first set of numerical values, respectively representing predetermined characteristics characterizing any region of interest, is determined (409) for the target region of interest on the basis of the gray-scale level values of the pixels in the target window, and this first set of numerical values is stored, a set of pixels belonging respectively to so-called "candidate" regions of interest appearing in the second image is determined (402) in the second image, according to a predetermined selection criterion, and a second window, containing the said corresponding candidate region of interest, is generated (403) around each of these selected pixels, a second set of numerical values, respectively representing the predetermined characteristics, is determined (410) for each candidate region of interest, on the basis of the gray-scale level values of the pixels in the associated second window, this second set of numerical values is stored and the region of interest homologous to the target region of interest is identified on the basis of a comparison processing (411) between the first set of numerical values and each second set of numerical values, so as to minimize the risks of matching error between the homologous regions of interest.

**7.** Method according to claim 6, **characterized in that** the predetermined characteristics comprise shape, contrast or gradient characteristics.

**8.** Method according to claim 6 or 7, **characterized in that** the comparison processing includes a distance minimization processing between the two sets of numerical values.

**9.** Method according to one of the preceding claims, **characterized in that** an epipolar zone, containing at least the epipolar segment relating to the target pixel, is determined in the second stereotaxic image, and **in that** the pixels in the epipolar zone contain the selected pixels.

**10.** Method according to one of the preceding claims, **characterized in that** the selected pixels are chosen from the pixels in the second image which have gray-scale level maxima or minima whose dynamic range is greater than a predetermined threshold.

**11.** Method according to one of the preceding claims, **characterized in that** the matching includes a prior filtering of the stereotaxic images, in particular of the so-called "top-hat transformation" type.

**12.** Method for locating an element of interest contained in a three-dimensional object on the basis of the positions of homologous regions of interest corresponding to the element of interest and appearing in a set of stereotaxic digitized images of the object, **characterized in that** it comprises a selection, in first stereotaxic image (10), of a first so-called "target" region of interest (5d), a selection (405), in a second stereotaxic image (12), on the basis of a first automatic matching, of at least one second region of interest (5g) which may be homologous to the target region, the determination of the spatial position of a candidate pixel of a candidate element of interest corresponding to these two regions of interest, the determination (406) of the position, in a third stereotaxic image, of a projected pixel corresponding to the projection into this third stereotaxic image of the candidate pixel, and a second automatic matching between the target region of interest and a vicinity of the projected pixel, defining a projected region of interest, so as to minimize the risks of matching error between the homologous regions of interest.

**13.** Method according to claim 12, **characterized in that**, on the basis of the said first automatic matching, a set of second regions which may be homologous to the target region is selected in the second stereotaxic image, the spatial position of each candidate pixel corresponding to each pair of regions of interest which is formed by the target region and one of the second regions is determined, as well as the position in the third image of each corresponding projected pixel, and the second automatic matching between the target region and a vicinity of each projected pixel is carried out.

14. Method according to claim 13, **characterized in that** the set of second regions obtained is ordered in the decreasing order of their probability of being the region homologous to the target region, and the set of projected regions obtained is ordered in the decreasing order of their probability of being the region homologous to the target region, and the region homologous to the target region is selected as being the one whose product of the respective ranks in the two orderings is a minimum.

15. Method according to one of claims 12 to 14, **characterized in that** the first automatic matching is a matching as defined in one of claims 1 to 11.

16. Method according to one of claims 12 to 15, **characterized in that** the second automatic matching includes a correlation processing as defined in one of claims 1 to 5, between the vicinity of each projected pixel and a target window containing the target region of interest, or a comparison processing, as defined in one of claims 6 to 11, between the target region of interest and each projected region of interest.

# FIG_1

# FIG_2

# FIG_4

```
              ┌──────────────┐
              │  SELECTION   │ ～400
              │ PIXEL  CIBLE │
              └──────┬───────┘
                     │
                     ▼
              ┌──────────────┐
              │  GENERATION  │ ～401
              │ FENETRE CIBLE│
              └──────┬───────┘
          ┌──────────┴──────────────────────────────┐
          │                                     409  │
          ▼                                          ▼
┌──────────────┐                         ┌──────────────────┐
│  SELECTION   │ ～402                    │   DETERMINATION  │
│   PIXELS     │                         │  CARACTERISQUES  │
│  2ᵉ IMAGE    │                         │  REGION  CIBLE   │
└──────┬───────┘                         └─────────┬────────┘
       │                                           │
       ▼                                           │
┌──────────────┐           410                     │
│  GENERATION  │ ～403       │                      │
│ 2ᵉ FENETRES  │            │                      │
└──────┬───────┘            ▼                      ▼
       │           ┌──────────────────┐   ┌──────────────┐
       │──────────▶│   DETERMINATION  │──▶│  COMPARAISON │
       │           │  CARACTERISTIQUES│   │              │
       │           │ REGION CANDIDATES│   └──────┬───────┘
       ▼           └──────────────────┘          │
┌──────────────┐                                 │ 411
│  CORRELATION │        ┌──────────────┐          │
└──────┬───────┘        │  SELECTION   │◀─────────┘
       │                │   REGION     │
  404  │───────────────▶│  HOMOLOGUE   │ ～405
                        └──────┬───────┘
                               │
                               ▼
                        ┌──────────────┐
                        │REPROJECTION SUR│ ～406
                        │IMAGE DE CENTRAGE│
                        └──────┬───────┘
                   ┌───────────┴───────────┐
                   ▼                       ▼
          ┌──────────────┐        ┌──────────────┐
          │  CORRELATION │        │  COMPARAISON │
          └──────┬───────┘        └──────┬───────┘
            407  │                       │  412
                 │   ┌──────────────┐    │
                 └──▶│  SELECTION   │◀───┘
                     │   FINALE     │
                     └──────┬───────┘
                            │
                           408
```

# FIG_3

# FIG_5

## FIG_6